# EUROPÄISCHE PATENTSCHRIFT

(11) **EP 2 059 466 B1**
(45) Veröffentlichungstag und Bekanntmachung des Hinweises auf die Patenterteilung: **31.10.2012**
(21) Anmeldenummer: 07818028.8
(22) Anmeldetag: 16.08.2007
(51) Int. Cl.: B65G 47/256, B07C 5/34, B65B 7/28

(54) **VORRICHTUNG ZUM ZUFÜHREN VON VERSCHLÜSSEN AN EINE VERSCHLIESSMASCHINE**
DEVICE FOR FEEDING SEALS TO A CAPPING MACHINE
DISPOSITIF POUR AMENER DES FERMETURES SUR UNE MACHINE DE FERMETURE

(30) Priorität: 19.08.2006 DE 102006039091
(43) Veröffentlichungstag der Anmeldung: 20.05.2009
(73) Patentinhaber: KHS GmbH, 44143 Dortmund (DE)
(72) Erfinder: WILHELM, Lothar, 67784 Karben (DE); HILLMANN, Heinz, 67286 Obrigheim (DE)
(86) Internationale Anmeldenummer: PCT/EP2007/007206
(87) Internationale Veröffentlichungsnummer: WO 2008/022735

(56) Entgegenhaltungen:
- EP-A- 0 782 888
- DE-A1- 10 307 601
- US-A- 3 879 921
- US-A- 6 062 395

## Beschreibung

Die Erfindung bezieht sich auf eine Vorrichtung gemäß Oberbegriff Patentanspruch 1 zum Zuführen von kappenartigen Verschlüssen, insbesondere von kappenartigen Schraubvarschlüssen, an eine Verschließmaschine.

Vorrichtungen zum Zuführen von kappenartigen Verschlüssen, insbesondere auch von als Schraubverschlüsse ausgebildeten kappenartigen Verschlüssen an Verschließmaschinen bzw. an Verschlussübergaben solcher Verschließmaschinen zum Verschließen von Flaschen oder dergl. Behältern sind in verschiedensten Ausführungen bekannt. Grundsätzlich bestehen derartige Vorrichtungen aus einem Zuführ- oder Förderkanal, dessen Querschnitt an die Form der Verschlüsse derart angepasst, d.h. beispielsweise rechteckförmig derart ausgebildet Ist, dass die Verschlüsse im Förderkanal mit ihrer Verschlussachse senkrecht zur Förderrichtung ausgerichtet sind und dabei lediglich zwei Orientierungen aufweisen können, und zwar eine für die Weiterverarbeitung der Verschlüsse richtige Orientierung, in der die kappenartigen Verschlüsse mit ihrer offenen Seite jeweils zu einer ersten Seite des Förderkanals orientiert sind, sowie eine für die Weiterverarbeitung nicht brauchbare falsche Orientierung, in der die kappenartigen Verschlüsse mit ihrer offenen Seite zu einer der ersten Seite gegenüberliegenden zweiten Seite des Förderkanals orientiert sind.

Die Verschlüsse gelangen über ein Sortierwerk in den Förderkanal. Bereits in diesem Sortierwerk erfolgt ein Ausrichten der Verschlüsse derart, dass nahezu sämtliche, an den Förderkanal übergebenen Verschlüsse bereits die richtige Orientierung aufweisen. Dennoch lässt sich nicht mit letzter Sicherheit ausschließen, dass eine sehr geringe Anzahl von Verschlüssen mit der falschen Orientierung in den Förderkanal gelangt.

Um Fehler beim Verschließen der Behälter zu vermeiden, ist bei bekannten Vorrichtungen an dem jeweiligen Förderkanal eine Sperrvorrichtung vorgesehen, beispielsweise in Form eines Sternrades, welche nur richtig orientierte Verschlüsse passieren lässt, den Förderkanal aber für falsch orientierte Verschlüsse - und somit auch für alle nachfolgenden Verschlüsse aber sperrt, was unweigerlich einen Produktionsstillstand nach sich zieht.. Die falsch orientierten Verschlüsse müssen dann aus dem Förderkanal manuell entfernt werden. Dies ist mit manuellen Tätigkeiten verbunden, und relativ zeitaufwendig, was in der Praxis unerwünscht ist. Die Druckschrift EP 0 782 888 A2 offenbart eine Vorrichtung zum automatischen Ausstoßen von falsch orientierten Elementen aus einer Förderstrecke von Verschlüssen, Abdeckkappen oder anderen konkaven Elementen. Die entlang der Förderstecke transportierten Verschlüsse werden einem Sternrad zugeführt, das eine Vielzahl von Arme aufweist. Beim Vorbeifördern der Verschlüsse greift jeweils ein Arm In die offene Unterseite des Verschlusses ein. Für den Fall, dass ein Verschluss falsch orientiert im Förderkanal eingebracht ist, blockiert das Sternrad. Der mit dem Sternrad zusammenwirkende Lichtsender detektiert dieses Blockieren und ein Kappenauswerfer wirkt derart auf den falsch orientierten Verschluss ein, dass dieser aus dem Förderkanal über eine Öffnung ausgestoßen wird. Nachteilig hierbei ist, dass die oberhalb des falsch orientierten Verschlusses im Förderkanal befindlichen Verschlüsse schwerkraftbedingt in die Öffnung hineinfallen und dadurch ein Verstopfen des Förderkanals bewirken können.

Aufgabe der Erfindung ist es, eine Vorrichtung zum Zuführen von kappenartigen Verschlüssen und dabei insbesondere von Schraubverschlüssen an eine Verschließmaschine aufzuzeigen, welche die vorgenannten Nachteile vermeidet. Zur Lösung dieser Aufgabe ist eine Vorrichtung entsprechend dem Patentanspruch 1 ausgebildet.

Bei der erfindungsgemäßen Vorrichtung, bei welcher der Querschnitt des Förderkanals vorzugsweise wiederum so gewählt ist, dass die Verschlüsse in diesem Kanal nur eine von zwei möglichen Ausrichtungen hinsichtlich ihrer Verschlussachsen aufweisen können, werden die Verschlüsse beim Passieren wenigstens eines, am Förderkanal vorgesehenen und mit einer elektronischen Steuereinrichtung (z. B. Rechner) zusammen wirkenden Hauptsensors überwacht. Falsch orientierte Verschlüsse werden gesteuert durch die elektronische Steuereinrichtung an einer Ausschleus- oder Ausstoßstation aus dem Förderkanal ausgestoßen oder ausgeschleust.

Mit dem wenigstens einen Hauptsensor wird dabei beispielsweise als Kriterium für die richtige Orientierung der kappenartigen Verschlüsse deren offene Seite oder deren geschlossene Seite überwacht. Um eine möglichst hohe Sicherheit zu erreichen sind der wenigstens eine Hauptsensor und/oder die zugehörige Steuereinrichtung beispielsweise so ausgebildet, dass immer dann, wenn ein richtig orientierter Verschluss den Hauptsensor passiert, dieser dies der Steuereinrichtung durch ein entsprechendes Steuersignal bestätigt und die Steuereinrichtung auf Grund dieser Bestätigung die Ausschleus- oder Ausstoßstation nicht aktiviert, während bei einem Fehlen dieser Bestätigung die Ausschleus- oder Ausstoßstation von der Steuereinrichtung aktiviert wird.

Ein wesentlicher Vorteil der Erfindung besteht u.a. darin, dass ein unproblematisches und schnelles Ausschleusen falsch orientierter Verschlüsse möglich ist, so dass ein Anhalten der Verschließmaschine und eine Produktionsunterbrechung in der Regel nicht erforderlich sind.

Weiterbildungen sind Gegenstand der Unteransprüche. Die Erfindung wird im Folgenden anhand der Figuren an einem Ausführungsbeispiel erläutert. Es zeigen:
- Fig. 1: in sehr schematischer Darstellung die Zuführeinrichtung für Schraubverschlüsse an eine Verschließmaschine (Schraubverschließer);
- Fig. 2: in sehr schematischer Darstellung eine Ausschleus- oder Ausstoßstation;
- Fig. 3: eine Teillänge des Zuführkanals, zusammen mit einer von einem Sternrad gebildeten Sperreinrichtung.

Die in den Figuren allgemein mit 1 bezeichnete Vorrichtung dient zum Zuführen von kappenartigen, aus Metall und/oder Kunststoff gefertigten kappenartigen Schraubverschlüssen 2 an eine nicht dargestellte Verschließmaschine (Schraubverschließer) zum Aufbringen der Schraubverschlüsse 2 auf ebenfalls nicht dargestellte Flaschen oder dergleichen Behälter durch Aufschrauben.

Die Vorrichtung 1 besteht im Wesentlichen aus einem einen Vorrat an Schraubverschlüssen 2 in ungeordneter Menge aufnehmenden Sortierwerk 3, welches beispielsweise als Schwingtöpfförderer ausgeführt ist, der an der Innenfläche eines Topfes 4 eine wendelartige Förderstrecke 5 für die Schraubverschlüsse 2 mit Schikanen bildet, so dass die Schraubverschlüsse 2 sortiert und mit ihrer offenen Seite 2.1 in einer vorgegebenen Orientierung in einen Förderkanal 6 gelangen, dessen Innenquerschnitt dem Querschnitt der Schraubverschlüsse 2 derart angepasst ist, dass diese mit ihrer Verschlussachse VA senkrecht zur Längserstreckung des Förderkanals 6 bzw. zur Förderrichtung A orientiert sind und in diesem Förderkanal 6 eine einspurige Reihe bilden. Der Förderkanal, der beispielsweise einen rechteckförmigen Innenquerschnitt aufweist, erstreckt sich von dem Sortierwerk 3 in vertikaler Richtung nach unten und reicht mit seinem unteren Ende 6.1 bis an den Verschließer bzw. bis an eine dortige Verschlussübergabe des Verschließers, mit der die Schraubverschlüsse 2 in der dem Fachmann bekannten Weise jeweils einzeln auf einen zu verschließenden Behälter (z.B. Flasche) aufgesetzt werden.

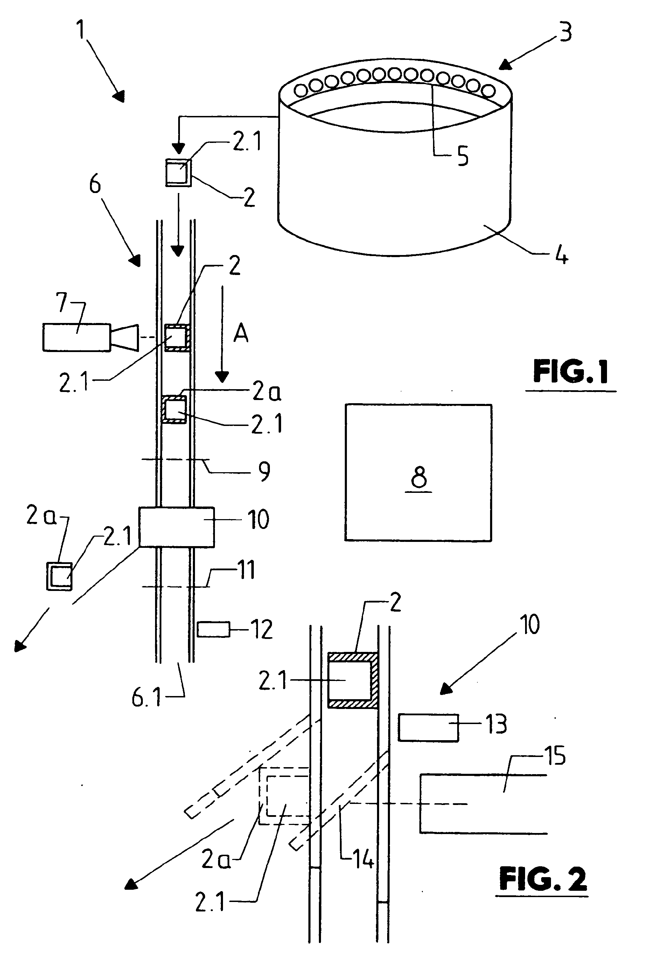

Bei der in der Figur 1 ausgeführten Ausführungsform sind das Sortierwerk 3 und der Förderkanal 6 so ausgebildet, dass die für das spätere Verschließen richtig orientierten Schraubverschlüsse 2 mit der offenen Seite 2.1 bei der für die Figur 1 gewählten Darstellung nach links orientiert sind.

Insbesondere auch bei der hohen Leistung von beispielsweise bis zu 70.000 verarbeiteten Schraubverschlüssen 2 je Stunde lässt es sich nicht vermeiden, dass vereinzelt Schraubverschlüsse 2a in falscher Orientierung in den Förderkanal 6 gelangen, wobei diese falsch orientierten Verschlüsse wegen des rechteckförmigen Innenquerschnitts des Förderkanals 6 dann mit der offenen Seite bei der für die Figur 1 gewählten Darstellung nach rechts orientiert sind, wie dies für den Verschluss 2a dargestellt ist.

Obwohl selbst bei einer längeren Betriebsdauer der Verschließmaschine die Fehlerrate bezüglich falsch orientierter Schraubverschlüsse 2a sehr gering ist, z.B. bei einer Leistung von 70.000 Schraubverschlüsse je Stunde und bei einer Betriebsdauer von acht Stunden nur in der Größenordnung von 0,5 und 16 falsch orientierten Schraubverschlüssen 2a liegt, verursachen diese Schraubverschlüsse 2a Störungen beim Verschließen der Behälter, was sich negativ auf die Gesamtleistung der Anlage auswirkt. Aus diesem Grunde ist es notwendig, falsch orientierte Schraubverschlüsse 2a aus dem Förderkanal 6 auszuschleusen oder auszustoßen, bevor sie an die Verschließmaschine gelangen.

Bei der Verschlusszuführung 1 erfolgt dieses Ausschleusen voll automatisch. Hierfür ist in Förderrichtung A auf die Sortiereinrichtung 3 folgend am Förderkanal 6 ein Hauptsensor 7 vorgesehen, der die sich an diesem Sensor vorbeibewegenden Schraubverschlüsse 2 hinsichtlich ihrer Orientierung überwacht, beispielsweise dadurch, dass dieser Sensor 7 bei richtig orientierten Schraubverschlüssen 2 die offene Seite 2.1 dieser Verschlüsse erkennt und mit einer elektronischen Steuereinrichtung 8 zusammenwirkt.

In Förderrichtung A auf den Sensor 7 folgend ist an dem Förderkanal 6 beispielsweise eine erste Sperrvorrichtung 9 vorgesehen, mit welcher der kontinuierlich vom Sortierwerk 3 in den Förderkanal 6 und in diesem nach unten fließende Strom der Schraubverschlüsse 2 durch ein Steuersignal der elektronischen Steuereinrichtung 8 gesperrt bzw. unterbrochen werden kann, beispielsweise bei einem Ausstoßen oder Ausschleusen eines falsch orientierten Schraubverschlusses 2a.

In Förderrichtung A auf die Sperrvorrichtung 9 folgend ist eine durch die Steuereinrichtung 8 angesteuerte Ausschleus- oder Ausstoßstation 10 zum Ausstoßen von falsch orientierten Schraubverschlüssen 2a vorgesehen. Die ausgestoßenen Schraubverschlüsse 2a werden beispielsweise in einem Sammelbehälter gesammelt und an das Sortierwerk 3 zurückgeführt.

Auf die Ausstoßstation 10 in Förderrichtung A folgend ist eine zweite Sperreinrichtung 11 vorgesehen, die bevorzugt so ausgebildet ist, dass sie nur die richtig orientierten Schraubverschlüsse 2 passieren lässt, den Förderkanal 6 für eventuell noch verbliebene falsch orientierte Schraubverschlüsse 2a aber sperrt, so dass solche falsch orientierten Schraubverschlüsse 2a dann beispielsweise manuell entfernt werden können, bevor sie an die Verschließmaschine gelangen.

In Förderrichtung A auf die Sperrvorrichtung 11 folgend ist ein weiterer Sensor 12 vorgesehen, der das Vorhandensein von Schraubverschlüssen 2 im Förderkanal 6 überwacht und beispielsweise über die elektronische Steuereinrichtung 8 das Absetzen eines Fehlersignals, z. B. eines optischen und/oder akustischen Fehlersignals dann veranlasst, wenn Schraubverschlüsse 2 im Förderkanal 6 im Bereich des Sensors 12 fehlen. Dies ist u.a. dann der Fall, wenn die Sperrvorrichtung 11 einen falsch orientierten Verschluss 2a und damit auch die im Förderkanal 6 folgenden Schraubverschlüsse 2 zurückhält.

Der Sensor 7 ist beispielsweise ein mechanischer, die sich vorbeibewegenden Schraubverschlüsse 2 abtastender Sensor oder aber ein optoelektrischer Sensor, beispielsweise eine Lichtschranke oder ein wenigstens eine Kamera aufweisendes Kamerasystem einer Bildverarbeitung, in der das von dem jeweiligen, sich am Sensor 7 vorbeibewegenden Schraubverschluss 2 erfasste Bild mit einem Sollbild verglichen wird. In jedem Fall liefert der Sensor 7 an die elektronische Steuereinrichtung 8 (beispielsweise Rechner) bei richtiger Orientierung der Schraubverschlüsse 2 ein entsprechendes Signal, welches ein Ausstoßen der Schraubverschlüsse an der Ausstoßstation 10 verhindert. Bei falsch orientierten Schraubverschlüssen 2a liefert der Sensor 7 an die Steuereinrichtung 8 ein das Ausstoßen dieser Schraubverschlüsse bewirkendes Signal. Um die exakte Positionsbestimmung jedes Schraubverschlusses 2 und dabei insbesondere auch der falsch orientierten Schraubverschlüsse 2a innerhalb des Förderkanals 6 zu ermöglichen und das Ausstoßen der falsch orientierten Schraubverschlüsse 2a mit großer Sicherheit zu erreichen, wird jeder Schraubverschluss 2 bzw. 2a beim Passieren des Sensors 7 beispielsweise von diesem oder einem weiteren dort vorgesehenen Sensor sowie auch an einem Sensor 13 der Ausschleus- oder Ausstoßstation 10 erfasst.

Die Figur 2 zeigt in schematischer Darstellung die Ausschleus- oder Ausstoßstation 10. Diese besteht im Wesentlichen aus einem beispielsweise schwenkbaren Ausstoßer 14, der gesteuert durch die Steuereinrichtung 8 betätigt wird, beispielsweise elektromechanisch mit Hilfe eines Elektromagneten 15 und der das Ausstoßen der falsch orientierten Schraubverschlüsse 2a sowie auch ein seitliches Öffnen des Förderkanals 6 bewirkt.

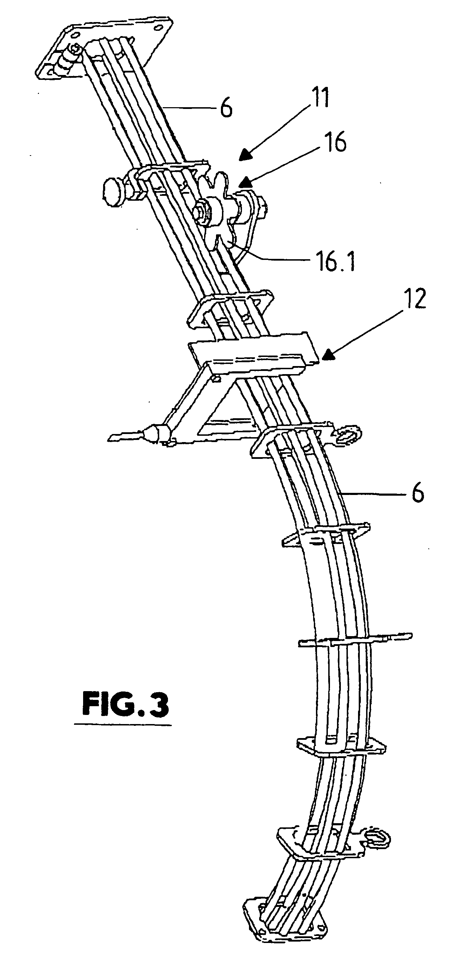

Die Figur 3 zeigt in perspektivischer Darstellung eine an die Ausschleus- oder Ausstoßstation 10 in Förderrichtung A anschließende Teillänge des Förderkanals 6 im Bereich der Sperrvorrichtung 11 und des in Förderrichtung A auf diese Sperrvorrichtung folgenden Sensors 12. Die Sperrvorrichtung 11 ist bei dieser Ausführungsform von einem Sternrad 16 gebildet, welches frei drehbar an dem gitterartig ausgebildeten Förderkanal 6 vorgesehen ist und mit einem Teil seines Umfangs in das Innere des Förderkanals 6 hineinreicht, und zwar derart, dass die Vorsprünge 16.1 des Sternrades 16 beim Passieren der richtig orientierten Schraubverschlüsse 2 jeweils zahnradartig in die offene Seite 2.1 der dicht aneinander anschließenden Schraubverschlüsse 2 unter Drehen des Sternrades 16 eingreifen, während dies bei einem falsch orientierten Schraubverschluss 2a nicht möglich ist und dadurch der Förderkanal 6 für einen solchen Verschluss und die nachfolgenden Schraubverschlüsse 2 gesperrt wird. Im dargestellten Ausführungsbeispiel sind die beiden Sensoren 12 und 13 jeweils als Lichtschranken ausgeführt.

Die Arbeitsweise der Verschlusszuführung bzw. Vorrichtung 1 ergibt sich bereits aus der vorstehenden Beschreibung, d.h. solange in den Förderkanal 6 ausschließlich richtig orientierte Schraubverschlüsse 2 gelangen, werden diese an den Ausgang 6.1 des Förderkanals 6 gefördert.

Jeder falsch orientierte Verschluss 2a wird von dem Sensor 7 erfasst und dann gesteuert durch die Steuereinrichtung 8 und durch Aktivieren der Ausschleus- oder Ausstoßstation 10 ausgeschleust oder ausgestoßen. Vor dem Ausschleusen oder Ausstoßen wird beispielsweise der Strom der Schraubverschlüsse 2 in Förderrichtung A nach dem falsch orientierten und auszustoßenden Schraubverschluss 2a durch die Sperrvorrichtung 9 gesperrt. Nach dem Ausschleusen oder Ausstoßen des falsch orientierten Verschlusses 2a wird die Sperrvorrichtung 9 sofort wieder geöffnet, so dass die Schraubverschlüsse 2 anschließend wiederum kontinuierlich an die Verschließmaschine gefördert werden.

Nicht ausgestoßene, falsch orientierte Schraubverschlüsse 2a werden auf jeden Fall an der Sperrvorrichtung 11 zurückgehalten und dort manuell entfernt. Mit dem Sensor 12 wird der kontinuierliche Fluss der Schraubverschlüsse 2 überwacht. Ist dieser Fluss unterbrochen, wird mit dem Signal des Sensors 12 ein Fehlersignal veranlasst, welches beispielsweise einen optischen und/oder akustischen Alarm sowie gegebenenfalls auch ein Stillsitzen der Verschließmaschine bewirkt.

Der Innenquerschnitt des Förderkanals 6 ist bewusst so gewählt, dass er für die Schraubverschlüsse 2 in der richtigen Orientierung und auch für die Schraubverschlüsse 2a mit der falschen Orientierung passend ist, so dass die Schraubverschlüsse 2a ohne Verstopfen des Förderkanals 6 aus diesem an der Auschleus- oder Ausstoßstation 10 ausgeschleust bzw. ausgestoßen oder an der Sperrvorrichtung 11 entnommen werden können.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrunde liegende Erfindungsgedanke verlassen wird.

So ist es beispielsweise insbesondere auch möglich, die Ausschleus- oder Ausstoßstation 10 anders auszuführen, als vorstehend beschrieben, beispielsweise in der Form, dass falsch orientierte Schraubverschlüsse 2a durch Blasluft aus dem Förderkanal 6 entfernt oder in eine beispielsweise von einer wendelarügen Förderstrecke gebildete Wendeeinrichtung gefördert werden, so dass die zunächst falsch orientierten Schraubverschlüsse 2a nach dem Passieren der Wendeeinrichtung die richtige Orientierung aufweisen und zusammen mit den bereits von Anfang an richtig orientierten Schraubverschlüssen 2 an die Verschließmaschine beispielsweise über einen Pufferspeicher weiter gegeben werden.

### Bezugszeichenliste

- 1: Verschlusszuführung
- 2: Schraubverschluss
- 2.1: offene Seite der Verschlüsse
- 2a: falsch orientierter Schraubverschluss
- 3: Sortierwerk
- 4: Schwingtopf
- 5: Förderbahn
- 6: Förderkanal
- 7: Sensor
- 8: elektronische Steuereinrichtung, beispielsweise Rechner
- 9: Sperrvorrichtung
- 10: Ausstoßstation
- 11: Sperrvorrichtung
- 12: Sensor
- 13: Sensor
- 14: Ausstoßer
- 15: Magnet
- 16: Sternrad
- 16.1: Vorsprung oder Zahn des Sternrades 16

- A: Förderrichtung der Schraubverschlüsse 2 bzw. 2a im Förderkanal 6
- VA: Verschlussachse

## Patentansprüche

1. Vorrichtung zum Zuführen von kappenartigen Verschlüssen, insbesondere Schraubverschlüssen (2, 2a), an eine Verschließmaschine, mit wenigstens einem Förderkanal (6), der eine an die Form der Verschlüsse (2) angepassten Querschnitt derart aufweist, dass die Verschlüsse in diesem Förderkanal mit ihrer Verschlussachse (VA) quer zur Förderrichtung (A) in einer durch den Querschnitt des Förderkanals (6) vorgegebenen Ausrichtung angeordnet sind, sowie durch Mittel zum Ausschleusen oder Ausstoßen solcher Verschlüsse (2a) aus dem Förderkanal (6), die nicht eine für ihr weiteres Verarbeiten notwendige Orientierung aufweisen, wobei am Förderkanal (6) wenigstens ein die Orientierung der Verschlüsse (2, 2a) erfassender Sensor (7) und eine von einer elektronischen Steuereinrichtung (8) angesteuerte Ausschleus- oder Ausstoßstation (10) vorgesehen sind, die in Abhängigkeit von dem Sensorsignal des wenigstens einen Sensors (7) für ein Ausschleusen oder Ausstoßen eines falsch orientierten Verschlusses (2a) aktiviert wird,
**dadurch gekennzeichnet,**
**dass** die Ausschleus- oder Ausstoßstation (10) In Förderrichtung (A) auf den Sensor (7) folgend angeordnet Ist und dass in Förderrichtung (A) auf den wenigstens einen Sensor (7) folgend und vor der Ausschleus- oder Ausstoßstation (10) eine Sperrvorrichtung (9) zum Sperren des Förderkanals (6) vorgesehen ist.

2. Vorrichtung nach Anspruch 1, **dadurch gekennzeichnet, dass** der Sensor (7) so ausgebildet ist, dass mit ihm das Vorhandensein einer offenen Seite (2.1) und/oder einer geschlossenen Seite der kappenartigen Verschlüsse (2, 2a) erfasst wird.

3. Vorrichtung nach Anspruch 1 oder 2, **dadurch gekennzeichnet, dass** der Sensor (7) ein mechanischer Sensor ist.

4. Vorrichtung nach einem der vorhergehenden Ansprüche, **dadurch gekennzeichnet, dass** der Sensor (7) ein elektrischer, beispielsweise ein optoelektrischer Sensor Ist, z.B. in Form einer Lichtstrecke, eines Infrarot-Entfernungsmessers und/oder eines wenigstens eine Kamera aufweisenden Bildverarbeitungssystems.

5. Vorrichtung nach einem der vorhergehenden Ansprüche, **dadurch gekennzeichnet, dass** die erste Sperrvorrichtung (9) durch die Steuereinrichtung (8) für ein Öffnen und Schließen des Förderkanals (6) steuerbar ist.

6. Vorrichtung nach einem der vorhergehenden Ansprüche, **dadurch gekennzeichnet, dass** die erste Sperrvorrichtung (9) durch die Steuereinrichtung (8) derart steuerbar ist, dass sie bei Ausschleusen oder Ausstoßen eines falsch orientierten Verschlusses (2a) an der Ausstoßstation (10) den Förderkanal (6) sperrt.

7. Vorrichtung nach einem der vorhergehenden Ansprüche, **dadurch gekennzeichnet, dass** in Förderrichtung (A) des Förderkanals (6) auf die Ausschleus- oder Ausstoßstation (10) folgend eine Sperrvorrichtung (11) vorgesehen ist, die richtig orientierte Verschlüsse (2) passieren lässt, den Förderkanal (6) für falsch orientierte Verschlüsse (2a) sperrt.

8. Vorrichtung nach einem der vorhergehenden Ansprüche, **gekennzeichnet durch** wenigstens einen Hitfssensor (12) in Förderrichtung (A) nach der Sperrvorrichtung (11) zur Erfassung einer Unterbrechung des Förderstromes der Verschlüsse (2).

9. Vorrichtung nach einem der vorhergehenden Ansprüche, **dadurch gekennzeichnet, dass** an der Ausschleus- oder Ausstoßstation (10) wenigstens ein über die Steuerelnrlchtung (8) ansteuerbares Aunschleus- oder Ausstoßelement vorgesehen ist.

10. Vorrichtung nach einem der vorhergehenden Ansprüche, **dadurch gekennzeichnet, dass** die Ausschleus- oder Ausstoßstation (10) einen Ausstoßer oder Umlenker (14) aufweist, der durch ein elektrisch steuerbares Antriebselement, beispielsweise durch ein elektrisch mechanisches Antriebselement (15) über die Steuereinrichtung (8) ansteuerbar ist.

11. Vorrichtung nach einem der vorhergehenden Ansprüche, **dadurch gekennzeichnet, dass** an der Ausschleus- oder Ausstoßstation (10) wenigstens eine Düse für eine gesteuerte Abgabe eines unter Druck stehenden dampf - und/oder gasförmigen Mediums, beispielsweise für eine gesteuerte Abgabe von Druckluft, zum Ausblasen falsch orientierter Verschlüsse (2a) vorgesehen ist.

12. Vorrichtung nach einem der Ansprüche 7 bis 11, **dadurch gekennzeichnet, dass**
die auf die Ausschleus- oder Ausstoßstation (10) folgende Sperrvorrichtung (11) von einem in den Förderkanal (6) hineinreichenden Sternrad (16) gebildet ist.

13. Vorrichtung nach einem der vorhergehenden Ansprüche, **dadurch gekennzeichnet, dass** der Förderkanal (6) mit einem Einlass an den Auslass eines Sortierwerks (3) angeschlossen ist, über welches die Verschlüsse (2, 2a) aus einem ungeordneten Vorrat dem Förderkanal (6) zugeführt werden.

## Claims

1. A device for feeding cap-like seals, in particular screw-type caps (2, 2a), to a capping machine, having at least one conveying channel (6) which has a cross-section matched to the shape of the seals (2) such that the seals are arranged in this conveying channel with their seal axis (VA) square to the conveying direction (A) in an orientation predetermined by the cross-section of the conveying channel (6), as well as by *[sic]* means for discharging or ejecting seals (2a) out of the conveying channel (6) that do not have the required orientation for their further processing, there being provided on the conveying channel (6) at least one sensor (7) sensing the orientation of the seals (2, 2a) and one discharge or ejector station (10) which is controlled by an electronic controller (8) and which is activated as a function of the sensor signal of the at least one sensor (7) for a discharging or ejecting of an incorrectly oriented seal (2a), wherein the ejector station (10) is arranged downstream of the sensor (7) in the conveying direction (A) and a blocking device (9) for blocking the conveying channel (6) is provided downstream of the at least one sensor (7) and upstream of the discharge or ejector station (10) in conveying direction (A).

2. The device of claim 1 wherein the sensor (7) is configured so that it senses the presence of an open side (2.1) and/or of a closed side of the cap-like seal (2, 2a).

3. The device of claim 1 or 2 wherein the sensor (7) is a mechanical sensor.

4. The device of any one of the preceding claims wherein the sensor (7) is an electrical, for example an opto-electrical sensor, e.g. in the form of a light path, of an infrared distance meter and/or of an image processing system exhibiting at least one camera.

5. The device of any one of the preceding claims wherein the first blocking device (9) can be controlled by the controller (8) for an opening and closing of the conveying channel (8).

6. The device of any one of the preceding claims wherein the first blocking device (9) can be controlled by the controller (8) in such a way that it blocks the conveying channel (6) when an incorrectly oriented seal (2a) is discharged or ejected at the ejector station (10).

7. The device of any one of the preceding claims wherein a blocking device (11) is provided downstream of the discharge or ejector station (10) in conveying direction (A) of conveying channel (6) and which allows correctly oriented seals (2) to pass, blocks the conveying channel (6) for incorrectly oriented seals (2a) *[sic]*.

8. The device of any one of the preceding claims **characterised by** at least one auxiliary sensor (12) downstream of the blocking device (11) in conveying direction (A) for detecting an interruption in the conveying flow of the seals (2).

9. The device of any one of the preceding claims wherein at least one discharge or ejector element which can be actuated by the controller (8) is provided at the discharge or ejector station (10).

10. The device of any one of the preceding claims wherein the discharge or ejector station (10) exhibits an ejector or diverter (14) which the controller (8) can actuate by an electrically controllable drive element, for example by an electrically mechanical drive element (15).

11. The device of any one of the preceding claims wherein at least one nozzle for a controlled delivery of a pressurised vaporous and/or gaseous medium, for example for a controlled delivery of compressed air, is provided at the discharge or ejector station (10) for blowing out incorrectly oriented seals (2a).

12. The device of any one of claims 7 to 11 wherein the blocking device (11) downstream of the discharge or ejector station (10) is formed by a star wheel (16) extending into the conveying channel (6).

13. The device of any one of the preceding claims wherein the conveying channel (6) is connected by an inlet to the outlet of a sorting mechanism (3) by which the seals (2, 2a) are fed from an unsorted stock to the conveying channel (6).

## Revendications

1. Dispositif pour l'amenée de fermetures du type de bouchons, en particulier de fermetures à vis (2, 2a), à une machine à sertir, comprenant au moins un conduit de transport (6) qui présente une section adaptée à la forme des fermetures (2) de telle sorte que les fermetures sont agencées dans ce conduit de transport avec leur axe de fermeture (VA) en position transversale par rapport au sens de transport (A) dans une direction imposée par la section du conduit de transport (6), de même que les fermetures qui ne présentent pas une orientation requise pour leur traitement ultérieur sont agencées en dehors du conduit de transport (6) par des moyens d'éclusage et d'éjection de ces fermetures (2a), dans lequel qu'il est prévu dans le conduit de transport (6) au moins un capteur (7) déterminant l'orientation des fermetures (2, 2a) et une station d'éclusage ou d'éjection (10) commandée par un dispositif de commande électronique (8) qui est activée en fonction du signal de détection de l'au moins un capteur (7) pour un éclusage ou une éjection d'une fermeture mal orientée (2a),
**caractérisé en ce que** la station d'éclusage ou d'éjection (10) est agencée en aval du capteur (7) dans le sens de transport (A) et **en ce qu'**un dispositif de blocage (9) est prévu en aval de l'au moins un capteur (7) et en amont de la station d'éclusage ou d'éjection (10) dans le sens de transport (A) afin de bloquer le conduit de transport (6).

2. Dispositif selon la revendication 1, **caractérisé en ce que** le capteur (7) est réalisé de telle sorte que la présence d'un côté ouvert (2.1) et/ou d'un côté fermé des fermetures du type de bouchons (2, 2a) est déterminée au moyen de celui-ci.

3. Dispositif selon la revendication 1 ou 2, **caractérisé en ce que** le capteur (7) est un capteur mécanique.

4. Dispositif selon l'une quelconque des revendications précédentes, **caractérisé en ce que** le capteur (7) est un capteur électrique, par exemple opto-électrique, par exemple sous la forme d'un faisceau lumineux, d'un télémètre à infrarouge et/ou d'un système de traitement d'image comprenant au moins une caméra.

5. Dispositif selon l'une quelconque des revendications précédentes, **caractérisé en ce que** le premier dispositif de blocage (9) peut être commandé par le dispositif de commande (8) pour une ouverture et une fermeture du conduit de transport (6).

6. Dispositif selon l'une quelconque des revendications précédentes, **caractérisé en ce que** le premier dispositif de blocage (9) peut être commandé par le dispositif de commande (8) de telle sorte que lors de l'éclusage ou de l'éjection d'une fermeture mal orientée (2a) au niveau de la station d'éjection (10), il bloque le conduit de transport (6).

7. Dispositif selon l'une quelconque des revendications précédentes, **caractérisé en ce qu'**il est prévu, en aval de la station d'éclusage ou d'éjection (10) dans le sens de transport (A) du conduit de transport (6), un dispositif de blocage (11) qui laisse passer les fermetures bien orientées (2) et bloque le conduit de transport (6) pour les fermetures mal orientées (2a).

8. Dispositif selon l'une quelconque des revendications précédentes, **caractérisé par** au moins un capteur auxiliaire (12) après le dispositif de blocage (11) dans le sens de transport (A) destiné à détecter une interruption du flux de transport des fermetures (2).

9. Dispositif selon l'une quelconque des revendications précédentes, **caractérisé en ce qu'**au moins un élément d'éclusage ou d'éjection pouvant être commandé par le dispositif de commande (8) est prévu au niveau de la station d'éclusage ou d'éjection (10).

10. Dispositif selon l'une quelconque des revendications précédentes, **caractérisé en ce que** la station d'éclusage ou d'éjection (10) comprend un poussoir ou un diffuseur (14) qui peut être commandé par le dispositif de commande (8) au moyen d'un élément d'entraînement à commande électrique, par exemple au moyen d'un élément d'entraînement électromécanique (15).

11. Dispositif selon l'une quelconque des revendications précédentes, **caractérisé en ce qu'**il est prévu au niveau de la station d'éclusage ou d'éjection (10) au moins une buse pour une émission commandée d'une substance à l'état de vapeur et/ou de gaz sous pression, par exemple pour une émission commandée d'air comprimé, afin de souffler vers l'extérieur les fermetures mal orientées (2a).

12. Dispositif selon l'une quelconque des revendications 7 à 11, **caractérisé en ce que** le dispositif de blocage (11) situé en aval de la station d'éclusage ou d'éjection (10) est constitué par une roue-étoile (16) faisant saillie dans le conduit de transport (6).

13. Dispositif selon l'une quelconque des revendications précédentes, **caractérisé en ce que** le conduit de transport (6) est raccordé par une entrée à la sortie d'un mécanisme de triage (3) au moyen duquel les fermetures (2, 2a) sont amenées au conduit de transport (6) à partir d'une réserve non rangée.
